# FASCICULE DE BREVET EUROPEEN

(11) **EP 1 099 814 B1**
(45) Date de publication et mention de la délivrance du brevet: **14.04.2004**
(21) Numéro de dépôt: 00403086.2
(22) Date de dépôt: 07.11.2000
(51) Int. Cl.: E05B 49/00

(54) **Véhicule automobile équipé d'un système d'accès et/ou démarrage dit "mains libre"**
Mit einem handfreien Zugangs- und/oder Startsystem ausgerüstetes Kraftfahrzeug
Automobile provided with hands-free access and/or starting system

(30) Priorité: 10.11.1999 FR 9914107; 09.02.2000 FR 0001564
(43) Date de publication de la demande: 16.05.2001
(73) Titulaire: VALEO SECURITE HABITACLE S.A.S., 94042 Créteil Cédex (FR)
(72) Inventeur: Morillon, Jacques, 91300 Massy (FR); Baudard, Xavier, 75016 Paris (FR)
(74) Mandataire: Hervouet, Sylvie

(56) Documents cités:
- EP-A- 0 629 759
- EP-A- 0 833 026
- DE-A- 19 736 302
- FR-A- 2 749 607
- US-A- 5 600 323

## Description

La présente invention concerne un système d'accès et/ou de démarrage dit "mains libres" pour véhicule automobile.

L'invention concerne plus particulièrement un système d'accès et de démarrage dit "mains libres", ledit système comprenant une antenne intérieure, pour véhicule automobile.

Dans un tel système d'accès "mains libres", un dispositif d'identification est installé sur le véhicule, pour commander les moyens de verrouillage des ouvrants du véhicule, ce dispositif d'identification étant apte à échanger à distance des données avec au moins un identifiant porté par un utilisateur, pour permettre l'accès au véhicule lorsque l'identifiant a été identifié par le dispositif d'identification. Pour permettre le dialogue entre le dispositif d'identification et l'identifiant, plusieurs antennes sont généralement réparties sur le pourtour du véhicule, afin de détecter. la présence de l'identifiant à l'extérieur du véhicule. De telles antennes sont, par exemple, disposées dans les rétroviseurs, les poignées de portes, les montants de portes. Lorsque l'utilisateur a commandé le verrouillage du véhicule, par exemple en appuyant sur un bouton dédié sur la poignée de porte extérieure, et s'éloigne du véhicule, le système assure le verrouillage automatique des ouvrants du véhicule, dès que l'identifiant porté par l'utilisateur est sorti de la zone de couverture desdites antennes extérieures.

En outre, un tel système peut également commander des dispositifs d'anti-démarrage électronique du moteur du véhicule, lorsqu'une personne munie d'un identifiant autorisé à la conduite du véhicule, est à l'intérieur de l'habitacle. Le dispositif d'identification peut émettre un signal d'identification par des antennes disposées à l'intérieur du véhicule pour détecter un identifiant à l'intérieur du véhicule. Ces antennes sont disposées par exemple sur le tableau de bord, dans les sièges du véhicule ou sur les parois intérieures des portières.

Toutefois, le nombre d'antennes à implanter sur le véhicule et notamment à l'intérieur du véhicule devient important, ce qui augmente le coût et le temps du montage du système sur le véhicule.

Ces antennes intérieures peuvent également permettre d'effectuer une identification à l'intérieur du véhicule en vue du verrouillage extérieur en mode mains libres, afin de vérifier qu'il ne reste pas d'identifiant à l'intérieur du véhicule.

Lorsque les antennes intérieures sont utilisées pour une identification en vue du démarrage, il est nécessaire que le signal d'identification émis par les antennes ne s'étende pas en dehors du véhicule, pour éviter le démarrage intempestif du véhicule, par exemple suite à l'action d'un enfant dans l'habitacle, alors que le conducteur portant l'identifiant autorisant le démarrage se trouve juste à l'extérieur. Pour être certain que la zone de détection ne s'étend pas en dehors de l'habitacle, il est nécessaire de prévoir plusieurs antennes à zones de détection respectives limitées afin de couvrir l'intégralité de l'habitacle.

L'invention a pour but d'éliminer les inconvénients précités et de proposer un dispositif d'identification pour un système d'accès "mains libres" dans lequel le nombre d'antennes nécessaires est réduit, tout en ayant une couverture correcte de l'environnement extérieur du véhicule et de l'intérieur de l'habitacle de ce dernier.

A cet effet, l'invention a pour objet un dispositif d'identification assurant la commande des moyens de verrouillage/déverrouillage des ouvrants du véhicule et/ou la commande d'un système anti-démarrage, ledit dispositif étant apte à échanger à distance des données avec un identifiant destiné à être porté par un utilisateur, lorsque ledit identifiant se trouve dans une zone de couverture d'émission/réception dudit dispositif d'identification, pour permettre l'accès et/ou le démarrage dit "mains libres" au véhicule lorsque l'identifiant a été authentifié par le dispositif d'identification. Ce dispositif d'identification est caractérisé par le fait qu'il est relié à une seule antenne disposée à l'intérieur de l'habitacle du véhicule, le dispositif étant apte à émettre via ladite antenne à au moins deux puissances d'émission distinctes, une première puissance d'émission permettant à l'antenne de couvrir une première zone s'étendant sur au moins une partie de l'intérieur de l'habitacle, et une deuxième puissance d'émission supérieure à la première puissance, permettant à l'antenne de couvrir une deuxième zone s'étendant sur au moins l'intégralité de l'habitacle et éventuellement vers l'extérieur.

Selon un premier mode de réalisation, le dispositif est apte à émettre via ladite antenne à une première puissance d'émission permettant à l'antenne de couvrir une première zone sensiblement limitée à l'intérieur de l'habitacle, et à une deuxième puissance d'émission supérieure à la première puissance, permettant à l'antenne de couvrir une deuxième zone s'étendant au-delà de la première zone, à l'extérieur du véhicule pour l'accès "mains libres".

Selon une particularité, le dispositif d'identification est apte à commander, en réponse à une action de l'utilisateur sur un organe extérieur du véhicule, le déclenchement de l'échange de données d'identification à ladite première puissance d'émission, pour détecter la présence éventuelle d'un identifiant autorisé à l'intérieur du véhicule, en vue d'autoriser le verrouillage des ouvrants du véhicule.

Selon un deuxième mode de réalisation, le dispositif est apte à émettre via l'antenne intérieure à une première puissance d'émission permettant à l'antenne de couvrir une première zone s'étendant sur une partie seulement, de préférence majeure, de l'habitacle et à une deuxième puissance d'émission supérieure à la première puissance, permettant à l'antenne de couvrir une deuxième zone s'étendant sur l'intégralité de l'habitacle et sur une partie extérieure limitrophe au véhicule sans pour autant s'étendre sur toute la zone de couverture extérieure permettant l'accès "mains libres".

Selon une variante du deuxième mode de réalisation, le dispositif est apte à émettre via l'antenne intérieure à trois puissances d'émission distinctes, la troisième puissance d'émission étant supérieure à la deuxième et permettant à l'antenne de couvrir une troisième zone qui s'étend à l'extérieur du véhicule et qui constitue la zone de couverture extérieure permettant l'accès "mains libres".

Selon une particularité, le dispositif d'identification est apte à commander, en réponse à une action de l'utilisateur sur un organe extérieur du véhicule, le déclenchement de l'échange de données d'identification à ladite deuxième puissance d'émission, pour détecter la présence éventuelle d'un identifiant autorisé à l'intérieur du véhicule, en vue d'autoriser le verrouillage des ouvrants du véhicule.

Selon une caractéristique, le dispositif d'identification est apte à commander, en réponse à une action de l'utilisateur sur un organe extérieur du véhicule, le déclenchement de l'échange de données d'identification à une puissance d'émission permettant de détecter la présence éventuelle d'un identifiant autorisé à l'extérieur du véhicule dans ladite zone de couverture extérieure pour l'accès "mains libres". De préférence, l'organe extérieur précité est la poignée extérieure de portière ou un bouton poussoir extérieur.

Avantageusement, le positionnement de l'antenne unique dans l'habitacle et la valeur de la puissance d'émission permettant de couvrir la zone de couverture s'étendant à l'extérieur du véhicule sont déterminés de façon que le rayonnement de l'antenne puisse franchir les barrières métalliques et/ou vitrées des portières du véhicule, pour s'étendre à l'extérieur du véhicule, sur ladite zone de couverture.

Avantageusement, la puissance d'émission permettant de couvrir la zone s'étendant à l'extérieur du véhicule pour permettre l'accès "mains libres", est telle que le rayonnement atteint environ 2 mètres à l'extérieur du véhicule.

Selon encore une autre caractéristique, le dispositif d'identification est apte à commander, en réponse à l'action par l'utilisateur d'un bouton de démarrage dans l'habitacle, le déclenchement de l'échange de données d'identification à ladite première puissance d'émission, pour détecter la présence éventuelle d'un identifiant autorisé à l'intérieur de l'habitacle, en vue d'autoriser le démarrage "mains libres" du véhicule.

A titre d'exemple, le dispositif d'identification émet un signal d'interrogation via l'antenne unique, à la première puissance d'émission précitée, en basse fréquence, par exemple de l'ordre de 125 kHz.

On peut prévoir que ladite antenne unique est en forme de boucle à l'intérieur de l'habitacle.

A titre d'alternative, le dispositif d'identification présente au moins deux antennes extérieures émettant à une puissance d'émission permettant à ces antennes de couvrir une troisième zone qui s'étend à l'extérieur du véhicule et qui constitue la zone de couverture extérieure permettant l'accès "mains libres" au véhicule.

L'invention concerne également un véhicule automobile comportant un dispositif d'identification pour la commande de moyens de verrouillages/déverrouillage des ouvrants et/ou la commande d'un système d'antidémarrage, selon l'invention

L'invention sera mieux comprise, et d'autres buts, détails, caractéristiques et avantages apparaîtront plus clairement au cours de la description explicative détaillée qui va suivre de deux modes de réalisation particuliers actuellement préférés de l'invention, en référence aux figures schématiques annexées :
- la figure 1 représente une vue schématique de dessus d'un véhicule selon un premier mode de réalisation de l'invention ; et,
- la figure 2 représente une vue schématique de dessus d'un véhicule selon un second mode de réalisation de l'invention.

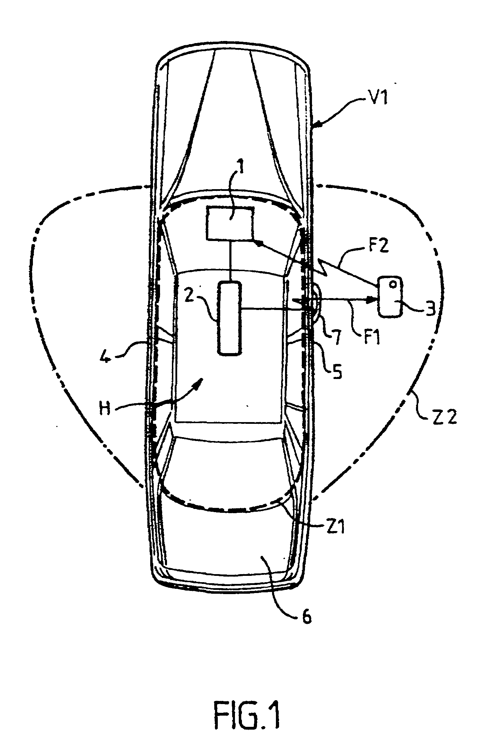

Sur la figure 1, on a représenté un véhicule automobile V1 qui comporte une unité électronique de gestion principale 1 incorporant un dispositif d'identification selon un premier mode de réalisation de l'invention. Cette unité 1 est reliée à une antenne unique 2, située à l'intérieur de l'habitacle H du véhicule, cette antenne 2 ayant, par exemple, une forme en boucle. Le moyen d'identification comporte, de préférence, un émetteur en basse fréquence et un récepteur en radio fréquence pour permettre d'échanger des données à distance avec un ou plusieurs identifiants, par exemple un identifiant 3. On a représenté par une flèche en zigzag F1 l'émission d'un signal en basse fréquence de l'antenne 2 vers un identifiant 3 situé à l'extérieur du véhicule V1, et par une flèche en zigzag F2 l'envoi du signal de réponse en radio fréquence de l'identifiant extérieur 3 vers l'unité 1.

L'unité électronique 1 est apte à commander le verrouillage/déverrouillage des portières latérales 4, 5 du véhicule, ainsi que du hayon de coffre 6. On a représenté sur la portière latérale 5 une poignée extérieure de portière 7. Cette poignée 7 peut être munie d'un bouton dédié pour signaler à l'unité 1 qu'un ordre de verrouillage ou de déverrouillage est donné par l'utilisateur. Bien que cela ne soit pas représenté, un autre bouton dédié sur le tableau de bord du véhicule peut être destiné à envoyer à l'unité 1 un ordre de démarrage du véhicule.

Le fonctionnement de l'invention va maintenant être brièvement expliqué.

Lorsqu'un utilisateur muni d'un identifiant autorisé 3 s'approche du véhicule et tire sur la poignée 7, l'unité 1 est réveillée et envoie via l'antenne unique 2 un signal d'interrogation vers l'identifiant 3, comme schématisé par la flèche F1. Ce signal d'interrogation est émis à une puissance élevée permettant de couvrir une zone Z2 qui s'étend dans tout l'habitacle H du véhicule ainsi qu'à l'extérieur, sur les côtés des portières 4,5 et, avantageusement, la puissance est telle que le champ magnétique (rayonnement) atteigne environ 2 m à l'extérieur du véhicule. La puissance de ce signal doit être suffisante pour permettre au champ électromagnétique de traverser les barrières métalliques et/ou vitrées des portières 4, 5 et, avantageusement, la puissance est telle que le champ magnétique (rayonnement) atteigne environ 2 m à l'extérieur du véhicule. Si l'identifiant 3 est bien dans la zone de couverture Z2, il est mis en éveil et répond en envoyant un signal en radiofréquence, comme schématisé par la flèche F2, vers l'unité électronique 1. Si l'identifiant est bien autorisé, l'unité 1 commande alors le déverrouillage des portières 4, 5 et du hayon de coffre 6.

Lorsque l'utilisateur s'installe dans le véhicule pour conduire, il appuie sur un bouton de démarrage qui provoque l'émission par l'unité 1 via l'antenne 2 d'un autre signal d'interrogation à une autre puissance d'émission plus faible, de façon que le rayonnement électromagnétique engendré par l'antenne 2 s'étende sur une autre zone de couverture Z1 qui est sensiblement limitée à l'intérieur de l'habitacle du véhicule. Si l'identifiant autorisé est détecté dans l'habitacle H et que cet identifiant est habilité à permettre le démarrage, l'unité centrale 1 commande alors automatiquement le démarrage du véhicule.

Il est possible de prévoir au niveau de l'unité électronique 1 un commutateur apte à basculer entre deux puissances d'émission distinctes, selon que la détection doit être effectuée à l'intérieur ou à l'extérieur.

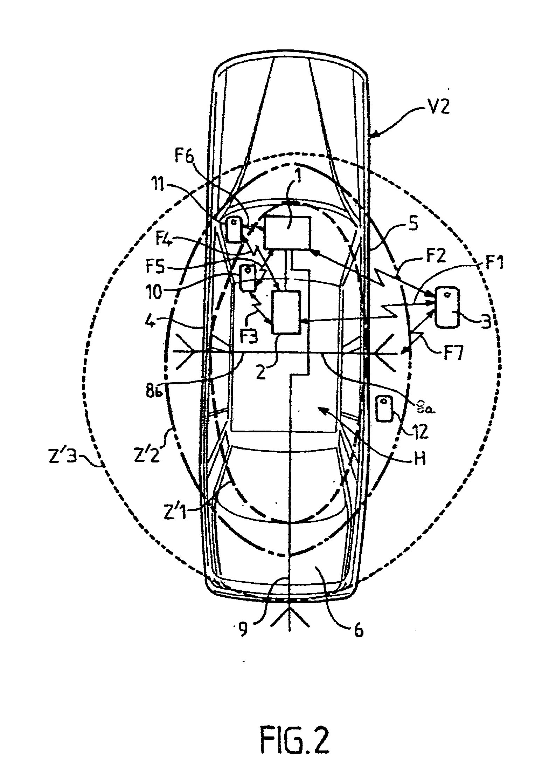

La figure 2 représente un véhicule automobile V2 comprenant un dispositif d'identification selon un second mode de réalisation sur laquelle les éléments identiques au premier mode de réalisation portent les mêmes références.

Le véhicule automobile comporte une unité électronique de gestion principale 1 incorporant un dispositif d'identification et reliée à une antenne intérieure unique 2, cette antenne 2 ayant, par exemple, une forme en boucle.

Dans ce second mode de réalisation, cette antenne intérieure 2 est utilisée pour permettre l'émission de signaux d'interrogation lors du démarrage, du verrouillage ainsi que lors du déverrouillage.

Le moyen d'identification comporte, de préférence, un émetteur en basse fréquence et un récepteur en radio fréquence pour permettre d'échanger, via l'antenne 2, des données à distance avec un ou plusieurs identifiants, par exemple un identifiant 3. On a représenté par une flèche en zigzag F1, l'émission d'un signal en basse fréquence de l'antenne 2 vers un identifiant 3 situé à l'extérieur du véhicule V2 dans une zone Z'3 et par une flèche en zigzag F2 l'envoi du signal de réponse en radio fréquence de l'identifiant extérieur 3 vers l'unité électronique 1.

Une flèche en zigzag F3 représente l'émission d'un signal en basse fréquence de l'antenne intérieure 2 vers un identifiant 10 situé à l'intérieur de l'habitacle dans une zone Z'1, et une flèche en zigzag F4 représente l'émission d'un signal en basse fréquence de l'antenne intérieure 2 vers un identifiant 11 situé à l'intérieur de l'habitacle dans une zone Z'2. Les flèches en zigzag F5, respectivement F6, représentent l'envoi du signal de réponse en radio fréquence de l'identifiant intérieur 10, respectivement 11, vers l'unité électronique 1.

L'unité électronique 1 est apte à commander le verrouillage des portières latérales 4, 5 du véhicule, ainsi que du hayon de coffre 6. Bien que cela ne soit pas représenté, le système comprend un bouton dédié, par exemple sur la poignée extérieure du véhicule, pour signaler à l'unité électronique 1 qu'un ordre de verrouillage ou de déverrouillage est donné par l'utilisateur. Le système peut comprendre un autre bouton dédié, non représenté, sur le tableau de bord du véhicule, destiné à envoyer à l'unité électronique 1 un ordre de démarrage du véhicule.

Le fonctionnement de ce second mode de réalisation selon l'invention va maintenant être brièvement expliqué.

Lorsqu'un utilisateur muni d'un identifiant autorisé 3 s'approche du véhicule et tire sur la poignée, l'unité 1 est réveillée et envoie via l'antenne unique 2 un signal d' interrogation vers l'identifiant 3, comme schématisé par la flèche F1. Ce signal d'interrogation est émis à une puissance donnée, appelée troisième puissance, permettant de couvrir une zone Z'3 qui s'étend dans tout l'habitacle H du véhicule ainsi qu'à l'extérieur, sur les côtés des portières 4, 5. La puissance de ce signal correspond par exemple à la puissance définie précédemment dans le premier mode de réalisation pour former la zone Z2. A titre d'exemple, la puissance est telle que le champ magnétique (rayonnement) atteigne environ 2 m à l'extérieur du véhicule. Si l'identifiant 3 est bien dans la zone de couverture Z'3, il est mis en éveil et répond en envoyant un signal en radiofréquence, comme schématisé par la flèche F2, vers l'unité électronique 1. Si l'identifiant est bien autorisé, l'unité 1 commande alors le déverrouillage des portières 4, 5 et du hayon de coffre 6.

Lorsque l'utilisateur s'installe dans le véhicule pour conduire, il appuie sur le bouton dédié de démarrage qui provoque l'émission par l'unité électronique 1 via l'antenne intérieure 2, d'un signal d'interrogation schématisé par la flèche F3, à une première puissance d'émission, de façon que le rayonnement électromagnétique engendré par l'antenne 2 s'étende sur une zone de couverture ou de détection Z'1. Cette zone de couverture Z' 1 est limitée à l'intérieur de l'habitacle du véhicule. Elle s'étend sur une majeure partie de l'habitacle et ne s'étend pas à l'extérieur du véhicule. Cette puissance d'émission est déterminée afin d'être certain qu'un identifiant à l'extérieur du véhicule, tel que l'identifiant 12, ne puisse être détecté. Si un signal de réponse, schématisé par la flèche F5, de l'identifiant 10 autorisé est détecté dans l'habitacle H et que cet identifiant est habilité à permettre le démarrage, l'unité électronique 1 commande alors automatiquement le démarrage du véhicule.

Lorsque l'utilisateur quitte son véhicule, il appui sur le bouton dédié de la poignée extérieure du véhicule qui provoque l'émission par l'unité 1 via l'antenne intérieure 2 d'un signal d'interrogation. Ce signal d'interrogation est émis dans un premier temps à une deuxième puissance d'émission couvrant la zone Z'2 afin de vérifier l'absence d'un identifiant dans l'habitacle, puis dans un deuxième temps à une troisième puissance pour détecter l'absence d'identifiant dans la zone Z'3 et commander le verrouillage des ouvrants. Si l'unité électronique détecte la présence d'un identifiant dans l'habitacle, c'est à dire la zone Z'2, le système peut mémoriser l'identité de l'identifiant oublié dans l'habitacle, et dans le cas où l'utilisateur souhaite laisser cet identifiant dans le véhicule, le système pourra déclencher le verrouillage du véhicule lorsqu'il ne détectera pas la présence d'un identifiant dans la zone Z'3, autre que l'identifiant laissé dans le véhicule.

Ainsi, suivant la figure 2, le système selon l'invention permet de ne pas détecter un identifiant extérieur 12 lors de la commande de démarrage tout en permettant la détection d'un identifiant intérieur 11 lors d'une commande de verrouillage.

Il est possible de prévoir au niveau de l'unité électronique 1 un commutateur apte à basculer entre deux puissances d'émission distinctes, selon que la détection doit être effectuée pour une commande de démarrage ou une commande de verrouillage.

Selon une variante ce de mode de réalisation, le véhicule automobile comporte une unité électronique de gestion principale 1 incorporant un dispositif d'identification et reliée à une pluralité d'antennes. Cette unité électronique 1 est reliée à une antenne 2, située à l'intérieur de l'habitacle H du véhicule, cette antenne 2 ayant, par exemple, une forme en boucle. L'unité électronique 1 est également reliée à des antennes 8a, 8b et 9 extérieures à l'habitacle H du véhicule. Les antennes 8a, 8b sont situées par exemple dans les poignées de portières latérales 4, 5 du véhicule V2. L'antenne 9 s'étend vers l'arrière du véhicule et sensiblement au niveau du hayon de coffre 6.

Le moyen d'identification comporte également, de préférence, un émetteur en basse fréquence et un récepteur en radio fréquence pour permettre d'échanger des données à distance avec un ou plusieurs identifiants, par exemple un identifiant 3. On a représenté par une flèche en zigzag F7 l'émission d'un signal en basse fréquence de l'antenne extérieure 8a vers un identifiant 3 situé à l'extérieur du véhicule V2, et par une flèche en zigzag F2 l'envoi du signal de réponse en radio fréquence de l'identifiant extérieur 3 vers l'unité électronique 1.

Les flèches en zigzag F3 et F5 représentent l'échange de données entre un identifiant (10) et l'unité électronique (1) via l'antenne intérieure (2) lorsque l' identifiant est situé dans la zone Z'1.

Les flèches F4 et F6 représentent quant à elles l'échange de données entre un identifiant (11) et l'unité électronique (1) via l'antenne intérieure (2) lorsque l'identifiant est situé dans la zone Z'2.

Le fonctionnement de cette variante va maintenant être brièvement expliqué.

Lorsqu'un utilisateur muni d'un identifiant autorisé 3 s'approche du véhicule et tire sur la poignée, l'unité électronique 1 est réveillée et envoie via les antennes extérieures 8a, 8b un signal d'interrogation, comme schématisé par la flèche F7, vers l'identifiant 3. Si l'identifiant 3 est bien dans la zone de couverture des antennes extérieures, il est mis en éveil et répond en envoyant un signal en radiofréquence, comme schématisé par la flèche F2, vers l'unité électronique 1. Si l'identifiant est bien autorisé, l'unité électronique 1 commande alors le déverrouillage des portières 4, 5 et du hayon de coffre 6.

Ainsi, le système peut émettre des signaux d' interrogation selon trois puissances distinctes correspondant aux trois zones Z'1, Z'2 et Z'3. La première puissance correspondant à la première zone Z'1 utilisée en vue du démarrage. La troisième puissance définissant la zone Z'3 est d'une part utilisée pour le déverrouillage et d'autre part utilisée, en combinaison avec la deuxième puissance, pour le verrouillage, afin de pouvoir avertir l'utilisateur de la présence éventuelle d'un identifiant dans l'habitacle. Lorsque l'utilisateur quitte son véhicule, il appui sur le bouton dédié de la poignée extérieure du véhicule qui provoque l'émission par l'unité électronique 1 via l'antenne intérieure 2 d'un signal d'interrogation F4, à une deuxième puissance d'émission de façon que le rayonnement électromagnétique engendré par l'antenne 2 s'étende sur une autre zone de couverture Z'2 qui est supérieure à la zone Z'1 précédemment citée. Cette deuxième puissance d'émission est déterminée afin d'être certain qu'un identifiant à l'intérieur de l'habitacle puisse être détecté, quitte à ce que la zone de détection Z'2 s'étende légèrement en dehors du véhicule. Si aucun identifiant n'est détecté à l'intérieur de l'habitacle, le système assure le verrouillage des ouvrants dès que l'identifiant porté par l'utilisateur est sorti de la zone de couverture des antennes extérieures. L'utilisation d'une deuxième puissance pour l'émission du signal d'interrogation permet ainsi de détecter un identifiant intérieur, tel que l'identifiant 11, sur réception d'un signal de réponse F6, qui n'aurait pu être détecté par un signal d'interrogation émis à une première puissance, telle que définie précédemment, correspondant à une zone de détection Z' 1.

## Revendications

1. Dispositif d'identification (1), pour véhicule (V1,V2) automobile, assurant la commande des moyens de verrouillage/déverrouillage des ouvrants (4-6) du véhicule et/ou la commande d'un système anti-démarrage, ledit dispositif étant apte à échanger à distance des données avec un identifiant (3, 10-12) destiné à être porté par un utilisateur, lorsque ledit identifiant se trouve dans une zone de couverture d'émission/réception dudit dispositif d'identification, pour permettre l'accès au véhicule et/ou le démarrage du véhicule dit "mains libres" lorsque l'identifiant a été authentifié par le dispositif d'identification, **caractérisé en ce qu'**il est relié à une seule antenne (2) disposée à l'intérieur de l'habitacle (H) du véhicule, et **en ce qu'**il est apte à émettre via ladite antenne à au moins deux puissances d'émission distinctes, une première puissance d'émission permettant à l'antenne de couvrir une première zone (Z1, Z'1) s'étendant sur au moins une partie de l'intérieur de l'habitacle (H), et une deuxième puissance d'émission supérieure à la première puissance, permettant à l'antenne de couvrir une deuxième zone (Z2, Z'2) s'étendant sur au moins l'intégralité de l'habitacle et éventuellement vers l'extérieur.

2. Dispositif d'identification (1) selon la revendication 1, **caractérisé en ce qu'**il est apte à émettre via ladite antenne intérieure à une première puissance d'émission permettant à l'antenne de couvrir une première zone (Z1) sensiblement limitée à l'intérieur de l'habitacle (H) d'un véhicule (V1), et à une deuxième puissance d'émission supérieure à la première puissance, permettant à l'antenne de couvrir une deuxième zone (Z2) s'étendant au-delà de la première zone, à l'extérieur du véhicule pour l'accès "mains libres".

3. Dispositif d'identification (1) selon la revendication 1, **caractérisé en ce qu'**il est apte à émettre via l'antenne intérieure (2) à une première puissance d'émission permettant à l'antenne de couvrir une première zone (Z'1) s'étendant sur une partie seulement, de préférence majeure, de l'habitacle (H) d'un véhicule (V2) et à une deuxième puissance d'émission supérieure à la première puissance, permettant à l'antenne de couvrir une deuxième zone (Z'2) s'étendant sur l'intégralité de l'habitacle et sur une partie extérieure limitrophe au véhicule, sans pour autant s'étendre sur toute la zone de couverture extérieure permettant l'accès "mains libres".

4. Dispositif d'identification (1) selon la revendication 3, **caractérisé en ce qu'**il est apte à émettre via l'antenne intérieure (2) à trois puissances d'émission distinctes, la troisième puissance d'émission étant supérieure à la deuxième et permettant à l'antenne de couvrir une troisième zone (Z'3) qui s'étend à l'extérieur du véhicule et qui constitue la zone de couverture extérieure permettant l'accès "mains libres".

5. Dispositif d'identification (1) selon la revendication 3 **caractérisé en ce qu'**il est apte à émettre via au moins deux antennes extérieures (8a,8b) à une puissance d'émission permettant à ces antennes de couvrir une troisième zone (Z'3) qui s'étend à l'extérieur du véhicule et qui constitue la zone de couverture extérieure permettant l'accès "mains libres" au véhicule.

6. Dispositif d'identification (1) selon l'une des revendications 3 à 5, **caractérisé en ce qu'**il est apte à commander, en réponse à une action de l'utilisateur sur un organe extérieur du véhicule (V2), le déclenchement de l'échange de données d'identification à ladite deuxième puissance d'émission, pour détecter la présence éventuelle d'un identifiant (11) autorisé à l'intérieur du véhicule, en vue d'autoriser le verrouillage des ouvrants (4-6) du véhicule.

7. Dispositif d'identification (1) selon la revendication 2, **caractérisé par le fait que** le dispositif d'identification (1) est apte à commander, en réponse à une action de l'utilisateur sur un organe extérieur (7) du véhicule (V1), le déclenchement de l'échange de données d'identification à ladite première puissance d'émission, pour détecter la présence éventuelle d'un identifiant autorisé à l'intérieur du véhicule, en vue d'autoriser le verrouillage des ouvrants (4-6) du véhicule.

8. Dispositif d'identification (1) selon la revendication 2 ou l'une des revendications 4 à 7, **caractérisé par le fait qu'**il est apte à commander, en réponse à une action de l'utilisateur sur un organe extérieur du véhicule (V1, V2), le déclenchement de l'échange de données d'identification à une puissance d'émission permettant de détecter la présence éventuelle d'un identifiant autorisé (3) à l'extérieur du véhicule dans ladite zone de couverture extérieure pour l'accès "mains libres".

9. Dispositif d'identification (1) selon la revendication 8, **caractérisé par le fait que** le positionnement de l'antenne unique (2) dans l'habitacle et la valeur de la puissance d'émission permettant de couvrir la zone de couverture (Z2, Z'3) s'étendant à l'extérieur du véhicule sont déterminés de façon que le rayonnement de l'antenne puisse franchir les barrières métalliques et/ou vitrées des portières (4, 5) du véhicule (V1, V2), pour s'étendre à l'extérieur du véhicule, sur ladite zone de couverture (Z2, Z'3).

10. Dispositif d'identification (1) selon la revendication 9, **caractérisé par le fait que** la puissance d'émission permettant de couvrir la zone (Z2, Z'3) s'étendant à l'extérieur du véhicule pour autoriser l'accès "mains libres", est telle que le rayonnement atteint environ 2 mètres à l'extérieur du véhicule.

11. Dispositif d'identification (1) selon l'une des revendications 1 à 10, **caractérisé par le fait qu'**il est apte à commander, en réponse à l'action par l'utilisateur d'un bouton de démarrage dans l'habitacle (H), le déclenchement de l'échange de données d'identification à ladite première puissance d'émission, pour détecter la présence éventuelle d'un identifiant autorisé à l'intérieur de l'habitacle, en vue d'autoriser le démarrage "mains libres" du véhicule.

12. Dispositif d'identification (1) selon l'une des revendications 1 à 11, **caractérisé par le fait qu'**il émet un signal d'interrogation via l'antenne intérieure (2), à la première puissance d'émission précitée, en basse fréquence, par exemple de l'ordre de 125 kHz.

13. Dispositif d'identification (1) selon l'une des revendications 1 à 12, **caractérisé par le fait que** ladite antenne intérieure (2) est en forme de boucle à l'intérieur de l'habitacle (H).

14. Véhicule automobile (V1,V2) **caractérisé en ce qu'**il comporte un dispositif d'identification (1) pour la commande de moyens de verrouillage/déverrouillage des ouvrants et/ou la commande d'un système d'antidémarrage, selon l'une des revendications 1 à 13.

## Claims

1. Identification device (1) for a motor vehicle (V1, V2) controlling the means for locking/unlocking the opening leaves (4-6) of the vehicle and/or for controlling an immobilizer system, the said device being able to remotely interchange data with an identifier (3, 10-12) intended to be carried or worn by a user, when the said identifier is in an zone of transmission/reception coverage of the said identification device, so as to allow "hands free" access to the vehicle and/or starting of the vehicle when the identifier has been authenticated by the identification device, **characterized in that** it is connected to a single antenna (2) arranged inside the cabin (H) of the vehicle, and **in that** it is able to emit via the said antenna at at least two separate transmission powers, a first transmission power allowing the antenna to cover a first zone (Z1, Z'1) extending over at least part of the interior of the cabin (H) and a second transmission power higher than the first power allowing the antenna to cover a second zone (Z2, Z'2) extending over at least the entirety of the cabin and possibly to the outside.

2. Identification device (1) according to Claim 1, **characterized in that** it is able to emit via the said interior antenna at a first transmission power allowing the antenna to cover a first zone (Z1) more or less confined to the interior of the cabin (H) of a vehicle (V1), and at a second transmission power higher than the first power allowing the antenna to cover a second zone (Z2) extending beyond the first zone, to the outside of the vehicle, for "hands free" access.

3. Identification device (1) according to Claim 1, **characterized in that** it is able to emit via the interior antenna (2) at a first transmission power allowing the antenna to cover a first zone (Z'1) extending over just part, preferably the most part, of the cabin (H) of a vehicle (V2) and at a second transmission power higher than the first power allowing the antenna to cover a second zone (Z'2) extending over the entirety of the cabin and over an exterior part immediately surrounding the vehicle, without, however, extending over the entire zone of exterior coverage allowing the "hands free" access.

4. Identification device (1) according to Claim 3, **characterized in that** it is able to emit via the interior antenna (2) at three different transmission powers, the third transmission power being higher than the second and allowing the antenna to cover a third zone (Z'3) which extends to the outside of the vehicle and constitutes the zone of exterior coverage allowing the "hands free" access.

5. Identification device (1) according to Claim 3, **characterized in that** it is able to emit via at least two exterior antennas (8a, 8b) at a transmission power allowing these antennas to cover a third zone (Z'3) which extends to the outside of the vehicle and constitutes the zone of exterior coverage allowing "hands free" access to the vehicle.

6. Identification device (1) according to one of Claims 3 to 5, **characterized in that** it is able, in response to action on the part of the user on an external component of the vehicle (V2), to trigger the interchange of identification data at the said second transmission power, so as to detect the possible presence of an authorised identifier (11) within the vehicle, with a view to allowing the locking of the opening leaves (4-6) of the vehicle.

7. Identification device (1) according to Claim 2, **characterized in that** the identification device (1) is able, in response to action on the part of the user on an exterior component (7) of the vehicle (V1), to trigger the interchange of identification data at the said first transmission power so as to detect the possible presence of an authorised identifier within the vehicle so as to allow the locking of the opening leaves (4-6) of the vehicle.

8. Identification device (1) according to Claim 2 or one of Claims 4 to 7, **characterized in that** it is able, in response to action on the part of the user on an external component of the vehicle (V1, V2), to trigger the interchange of identification data at a transmission power allowing the detection of the possible presence of an authorised identifier (3) outside the vehicle within the said zone of external coverage for the "hands free" access.

9. Identification device (1) according to Claim 8, **characterized in that** the positioning of the single antenna (2) in the cabin and the magnitude of the transmission power for covering the zone of coverage (Z2, Z'3) extending to outside the vehicle are determined in such a way that the radiation of the antenna can pass through the metallic and/or glazed barriers of the doors (4, 5) of the vehicle (V1, V2) to extend to outside the vehicle, over the said zone of coverage (Z2, Z'3).

10. Identification device (1) according to Claim 9, **characterized in that** the transmission power for covering the zone (Z2, Z'3) extending to outside the vehicle to allow "hands free" access is such that the radiation extends to about 2 metres outside the vehicle.

11. Identification device (1) according to one of Claims 1 to 10, **characterized in that** it is able, in response to action on the part of the user on a start button in the cabin (H), to trigger the interchange of identification data at the said first transmission power so as to detect the possible presence of an authorised identifier within the cabin, with a view to allowing the "hands free" starting of the vehicle.

12. Identification device (1) according to one of Claims 1 to 11, **characterized in that** it emits an interrogation signal via the interior antenna (1, 2) at the aforementioned first transmission power, at low frequency, for example of the order of 125 kHz.

13. Identification device (1) according to one of Claims 1 to 12, **characterized in that** the said interior antenna (2) is in the form of a loop within the cabin (H).

14. Motor vehicle (V1, V2), **characterized in that** it comprises an identification device (1) for operating means for locking/unlocking the opening leaves and/or for operating an immobilizer system, according to one of Claims 1 to 13.

## Patentansprüche

1. Identifikationsvorrichtung (1) für Kraftfahrzeuge (V1, V2), welche die Betätigung der Mittel zum Verriegeln/Entriegeln der Fahrzeugtüren (4 - 6) und/oder die Betätigung eines Startverhinderungssystems gewährleistet, wobei die Vorrichtung über eine Entfernung Daten mit einem Identifizierer (3, 10 - 12), der dazu bestimmt ist, von einem Benutzer mitgeführt zu werden, dann austauschen kann, wenn der Identifizierer sich in einem Sende-/Empfangsdeckungsbereich der Identifikationsvorrichtung befindet, um den sogenannten Freihandzugang zum Fahrzeug und/oder das sogenannte Freihandstarten des Fahrzeugs dann zu gestatten, wenn der Identifizierer von der Identifikationsvorrichtung authentifiziert wurde, **dadurch gekennzeichnet, dass** sie mit nur einer Antenne (2) verbunden ist, die innerhalb des Fahrgastraums (H) des Fahrzeugs angeordnet ist, und dass sie über die Antenne mit zumindest zwei unterschiedlichen Sendeleistungen eine erste Sendeleistung abgeben kann, die es der Antenne ermöglicht, einen ersten Bereich (Z1, Z'1) zu decken, der sich zumindest über einen Teil des Innenraums des Fahrgastraums (H) erstreckt, sowie eine zweite Sendeleistung, die höher als die erste Leistung ist und es der Antenne ermöglicht, einen zweiten Bereich (Z2, Z'2) zu decken, der sich zumindest über den gesamten Fahrgastraum und gegebenenfalls nach außerhalb erstreckt.

2. Identifikationsvorrichtung (1) nach Anspruch 1, **dadurch gekennzeichnet, dass** sie über die Innenantenne mit einer ersten Sendeleistung senden kann, die es der Antenne ermöglicht, einen ersten Bereich (Z1) zu decken, der im wesentlichen auf den Innenraum des Fahrgastraums (H) eines Fahrzeugs (V1) beschränkt ist, sowie mit einer zweiten Sendeleistung, die höher als die erste Leistung ist und es der Antenne ermöglicht, einen zweiten Bereich (Z2) zu decken, der sich zwecks Freihandzugangs über den ersten Bereich hinaus nach außerhalb des Fahrzeugs erstreckt.

3. Identifikationsvorrichtung (1) nach Anspruch 1, **dadurch gekennzeichnet, dass** sie über die Innenantenne (2) mit einer ersten Sendeleistung senden kann, die es der Antenne ermöglicht, einen ersten Bereich (Z'1) zu decken, der sich nur über einen Teil, vorzugsweise den Großteil des Innenraums des Fahrgastraums (H) eines Fahrzeugs (V2) erstreckt, sowie mit einer zweiten Sendeleistung, die höher als die erste Leistung ist und es der Antenne ermöglicht, einen zweiten Bereich (Z'2) zu decken, der sich über den gesamten Fahrgastraum und über einen an das Fahrzeug angrenzenden Außenbereich erstreckt, ohne sich jedoch über den gesamten Deckungsaußenbereich zu erstrecken, welcher den Freihandzugang gestattet.

4. Identifikationsvorrichtung (1) nach Anspruch 3, **dadurch gekennzeichnet, dass** sie über die Innenantenne (2) mit drei unterschiedlichen Sendeleistungen senden kann, wobei die dritte Sendeleistung höher als die zweite ist und es der Antenne ermöglicht, einen dritten Bereich (Z'3) zu decken, der sich außerhalb des Fahrzeugs erstreckt und den Deckungsaußenbereich bildet, der den Freihandzugang gestattet.

5. Identifikationsvorrichtung (1) nach Anspruch 3, **dadurch gekennzeichnet, dass** sie über zumindest zwei Außenantennen (8a, 8b) mit einer Sendeleistung senden kann, die es diesen Antennen ermöglicht, einen dritten Bereich (Z'3) zu decken, der sich außerhalb des Fahrzeugs erstreckt und den Deckungsaußenbereich bildet, der den Freihandzugang zum Fahrzeug gestattet.

6. Identifikationsvorrichtung (1) nach einem der Ansprüche 3 bis 5, **dadurch gekennzeichnet, dass** sie in Antwort auf einen Eingriff des Benutzers auf ein Außenglied des Fahrzeugs (V2) das Auslösen des Identifikationsdatenaustauschs mit der zweiten Sendeleistung steuern kann, um das eventuelle Vorhandensein eines autorisierten Identifizierers (11) innerhalb des Fahrzeugs zu erfassen, um somit die Verrieglung der Fahrzeugtüren (4 - 6) zu gestatten.

7. Identifikationsvorrichtung (1) nach Anspruch 2, **dadurch gekennzeichnet, dass** die Identifikationsvorrichtung (1) in Antwort auf einen Eingriff des Benutzers auf ein Außenglied (7) des Fahrzeugs (V1) das Auslösen des Identifikationsdatenaustauschs mit der ersten Sendeleistung steuern kann, um das eventuelle Vorhandensein eines autorisierten Identifizierers (11) innerhalb des Fahrzeugs zu erfassen, um somit die Verrieglung der Fahrzeugtüren (4 - 6) zu gestatten.

8. Identifikationsvorrichtung (1) nach Anspruch 2 oder einem der Ansprüche 4 bis 7, **dadurch gekennzeichnet, dass** sie in Antwort auf ein Einwirken des Benutzers auf ein Außenglied des Fahrzeugs (V1, V2) das Auslösen des Identifikationsdatenaustauschs mit einer Sendeleistung steuern kann, die es ermöglicht, das eventuelle Vorhandensein eines autorisierten Identifizierers (3) außerhalb des Fahrzeugs im Deckungsaußenbereich zwecks Freihandzugangs zu erfassen.

9. Identifikationsvorrichtung (1) nach Anspruch 8, **dadurch gekennzeichnet, dass** die Positionierung der einzigen Antenne (2) im Fahrgastraum und der Wert der Sendeleistung, die es ermöglicht, den sich außerhalb des Fahrzeugs erstreckenden Deckungsbereich (Z2, Z'3) zu decken, so bestimmt sind, dass die Strahlung der Antenne metallische und/oder gläserne Barrieren der Türen (4, 5) des Fahrzeugs (V1, V2) passieren kann, um sich nach außerhalb des Fahrzeugs über den Deckungsbereich (Z2, Z'3) zu erstrecken.

10. Identifikationsvorrichtung (1) nach Anspruch 9, **dadurch gekennzeichnet, dass** die Sendeleistung, mit welcher der sich außerhalb des Fahrzeugs erstreckende Bereich (Z2, Z'3) gedeckt werden kann, um den Freihandzugang zu gestatten, derart ist, dass die Strahlung bis etwa 2 m außerhalb des Fahrzeugs reicht.

11. Identifikationsvorrichtung (1) nach einem der Ansprüche 1 bis 10, **dadurch gekennzeichnet, dass** sie in Antwort auf den Eingriff des Benutzers auf einen Startknopf im Fahrgastraum (H) das Auslösen des Identifikationsdatenaustauschs mit der ersten Sendeleistung steuern kann, um das eventuelle Vorhandensein eines autorisierten Identifizierers zu erfassen, um damit das Freihandstarten des Fahrzeugs zu gestatten.

12. Identifikationsvorrichtung (1) nach einem der Ansprüche 1 bis 11, **dadurch gekennzeichnet, dass** sie über die Innenantenne (2) ein Abfragesignal mit der vorgenannten ersten Sendeleistung in Niederfrequenz beispielsweise in der Größenordnung von 125 kHz ausgibt.

13. Identifikationsvorrichtung (1) nach einem der Ansprüche 1 bis 12, **dadurch gekennzeichnet, dass** die Innenantenne (2) in Form einer Schleife innerhalb des Fahrgastraums (H) vorliegt.

14. Kraftfahrzeug (V1, V2), **dadurch gekennzeichnet, dass** es eine Identifikationsvorrichtung (1) nach einem der Ansprüche 1 bis 13 zum Betätigen der Mittel zum Verriegeln/Entriegeln der Türen und/oder zum Betätigen eines Startverhinderungssystems enthält.
